# EUROPÄISCHE PATENTANMELDUNG

(11) **EP 4 424 131 A1**
(43) Veröffentlichungstag der Anmeldung: **04.09.2024**
(21) Anmeldenummer: 24152175.6
(22) Anmeldetag: 16.01.2024
(51) Int. Cl.: A01B 79/00, A01D 78/10

(54) **LANDWIRTSCHAFTLICHES FAHRZEUGGESPANN ZUM SCHWADEN VON FUTTERERNTEGUT**

(30) Priorität: 01.03.2023 DE 102023104983
(71) Anmelder: CLAAS Saulgau GmbH, 88340 Bad Saulgau (DE)
(72) Erfinder: Mümken, Philipp, 88400 Biberach an der Riß (DE); Fischer, Josef, 88400 Biberach (DE); Reinhardt, Martin, 88367 Hohentengen (DE); Schmid, Christian, 88696 Owingen (DE); Rupp, Magnus, 73494 Rosenberg (DE); Pflanze, Sascha, 88348 Bad Saulgau (DE); Mock, Andreas, 88284 Wolpertswende (DE); Ober, Martin, 78736 Trichtingen (DE); Oldenburg, Joachim, 33428 Harsewinkel (DE); Fugunt, Michael, 88410 Bad Wurzach (DE); Thiesmann, Waldemar, 49080 Osnabrück (DE); Becker, Michael, 88367 Hohentengen (DE); Monkenbusch, Robin, 33378 Rheda-Wiedenbrück (DE)
(74) Vertreter: Budach, Steffen

(57) **Zusammenfassung**

Die vorliegende Erfindung betrifft ein landwirtschaftliches Fahrzeuggespann (1) zum Schwaden von abgemähten Futtererntegut (4) während eines Futterernteprozesses.

Die vorliegende Erfindung beruht auf dem allgemeinen Gedanken, dass das landwirtschaftliche Fahrzeuggespann (1) wenigstens eine Einstellvorrichtung (10) aufweist, die dazu vorgesehen und eingerichtet ist, den Traktor (2) und die Schwadvorrichtung (3) in Abhängigkeit sensorbasierter Daten einzustellen, um einen Energiegehalt, insbesondere einen Rohaschegehalt und/oder einen Trockenmassegehalt, des abgemähten Futterernteguts (4) für den Futterernteprozess zu optimieren.

## Beschreibung

Die vorliegende Erfindung betrifft ein landwirtschaftliches Fahrzeuggespann zum Schwaden von abgemähten Futtererntegut während eines Futterernteprozesses.

Dieser Futterernteprozess umfasst das Mähen des Futtererntegutes, das Wenden des abgemähten Futtererntegutes, das Schwaden des abgemähten Futtererntegutes, das Ernten des geschwadeten Futtererntegutes, das Verdichten und/oder das Lagern des geernteten Futterernteguts.

Die EP 3 909 417 A1 betrifft einen Traktor umfassend eine gekoppelte Schwadvorrichtung zum Schwaden von abgemähten Futtererntegut und eine Sensoranordnung, die so konfiguriert ist, dass diese ein erstes Signal ausgibt, das eine bestimmte Erntegutbedeckung vor der Schwadvorrichtung anzeigt, und ein zweites Signal ausgibt, das eine bestimmte Schwadqualität des landwirtschaftlichen Produkts anzeigt, wobei eine Steuerung dazu konfiguriert ist, das erste Signal und das zweite Signal zu empfangen, und eine Winkelgeschwindigkeit eines Motorantriebs, eine Fahrgeschwindigkeit des Traktors oder eine Höhe mehrerer Rechzinken über dem Feld oder einer Kombination davon basierend auf einem Vergleich der bestimmten Schwadqualität mit einer Zielschwadqualität zu steuern. Hierbei bezieht sich die Schwadqualität in der EP 3 909 417 A1 explizit lediglich auf die Form des Schwades, sodass zwar eine gewünschte Schwadform erzeugt wird, jedoch ist die Vorgabe der Schwadform beliebig, da ein Landwirt aufgrund von Arbeitsbelastung oder unzureichenden Informationen zwar eine gewünschte Schwadform auswählt, diese jedoch im Lichte des vollständigen Futterernteprozesses, der deutlich komplexer ist und mehr Arbeitsschritte als das Schwaden des abgemähten Futterernteguts umfasst, nachteilig für das Futtererntegut ist und daher keine ausreichende Erntequalität des Futterernteguts sichergestellt wird.

Es ist deshalb Aufgabe der Erfindung, die beschriebenen Nachteile des Standes der Technik zu vermeiden, und insbesondere ein landwirtschaftliches Fahrzeuggespann zum Schwaden von abgemähten Futtererntegut vorzuschlagen, welches die komplexen Zusammenhänge eines Futterernteprozesses besser berücksichtigt und sicherstellt, dass ein qualitativ hochwertiges, für die Einlagerung geeignetes und einen hohen Energiegehalt aufweisendes Erntegut erzeugt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass das landwirtschaftliche Fahrzeuggespann wenigstens eine Einstellvorrichtung aufweist, die dazu vorgesehen und eingerichtet ist, den Traktor und die Schwadvorrichtung in Abhängigkeit sensorbasierter Daten, insbesondere automatisiert, einzustellen, um einen Energiegehalt, insbesondere einen Rohaschegehalt und/oder einen Trockenmassegehalt, des abgemähten Futterernteguts für den Futterernteprozess zu optimieren. Das landwirtschaftliche Fahrzeuggespann weist einen Traktor und wenigstens eine an dem Traktor gekoppelten Schwadvorrichtung zum Schwaden von abgemähten Futtererntegut auf, welches auf einem landwirtschaftlichen Feld positioniert ist. Dieses landwirtschaftliche Fahrzeuggespann hat den Vorteil, dass einer Futterverschmutzung des Futterernteguts entgegengewirkt wird, da der Rohaschegehalt im Futtererntegut reduziert wird, und zusätzlich der Trockenmassegehalt optimiert wird, sodass ein maximaler Energiegehalt des abgemähten Futterernteguts, insbesondere automatisiert, erzielt wird, wobei der Fahrer während des Schwadens des abgemähten Futterernteguts aktiv unterstützt und entlastet wird.

Die Einstellvorrichtung kann, insbesondere teilweise, innerhalb und/oder, insbesondere teilweise, außerhalb des Traktors und/oder der Schwadvorrichtung ausgebildet sein. Die sensorbasierten Daten können Daten aufweisen, die mittels einer Sensorvorrichtung erfasst wurden. Die Einstellvorrichtung ist dazu vorgesehen und eingerichtet, insbesondere dazu ausgebildet und/oder programmiert, den Traktor und die Schwadvorrichtung in Abhängigkeit der sensorbasierten Daten, insbesondere automatisiert, einzustellen, insbesondere zu steuern und/oder zu regeln. Die Einstellvorrichtung kann als Steuer- und/oder Regelvorrichtung ausgebildet sein, die eine Einstellung durch eine Steuerung und/oder Regelung bewirkt. Die Einstellvorrichtung kann eine Rechenvorrichtung und einen Datenspeicher aufweisen. Ferner kann die Einstellvorrichtung für einen Fahrer des landwirtschaftlichen Fahrzeuggespanns ein Display zur Einstellung der Einstellvorrichtung aufweisen.

Die Einstellvorrichtung kann dazu vorgesehen und eingerichtet, insbesondere ausgebildet und/oder programmiert, sein, eine Fahrgeschwindigkeit des Traktors und/oder eine Lenkung des Traktors entlang einer Route auf dem landwirtschaftlichen Feld in Abhängigkeit der sensorbasierten Daten einzustellen. Die Einstellvorrichtung kann dazu vorgesehen und eingerichtet, insbesondere ausgebildet und/oder programmiert, sein, eine oder mehrere Komponenten der Schwadvorrichtung in Abhängigkeit der sensorbasierten Daten einzustellen. Die Einstellvorrichtung kann dazu vorgesehen und eingerichtet, insbesondere ausgebildet und/oder programmiert, sein, eine oder mehrere Komponenten des Schwadvorrichtung zur Erzeugung eines für den Futterernteprozess optimalen Schwades einzustellen.

Die Schwadvorrichtung kann einen Kreiselschwader, Sternradschwader, Rotorschwader, Pick-Up-Bandschwader, Kammschwader und/oder Bandrechschwader aufweisen.

Bei einer vorteilhaften Weiterbildung der erfindungsgemäßen Lösung ist vorgesehen, dass die Einstellvorrichtung als Assistenzsystem eingerichtet ist, welches eine Optimierung des Futterernteprozesses bewirkt, wobei das Assistenzsystem dazu vorgesehen und eingerichtet ist, einen Nutzer bei der Optimierung des Schwadens des abgemähten Futterernteguts während des Futterernteprozesses zu unterstützen, wobei diese Optimierung des Futterernteprozesses zumindest die Planung und/oder Durchführung des Schwadens des abgemähten Futterernteguts umfasst, sodass der Energiegehalt, insbesondere einen Rohaschegehalt und/oder einen Trockenmassegehalt, des abgemähten Futterernteguts für den Futterernteprozess optimiert wird. Hierdurch wird der Nutzer und/oder der Fahrer des Traktors während des Schwadens des abgemähten Futterernteguts aktiv unterstützt und entlastet.

Bei einer vorteilhaften Weiterbildung der erfindungsgemäßen Lösung ist vorgesehen, dass das landwirtschaftliche Fahrzeuggespann wenigstens eine Sensorvorrichtung zur Schwaderkennung aufweist, wobei die, insbesondere automatisierte, Einstellung des landwirtschaftlichen Fahrzeuggespanns, insbesondere des Traktors und/oder der Schwadvorrichtung, auf Basis von Vorfelderkennung, insbesondere vor dem landwirtschaftlichen Fahrzeuggespann, und/oder einer Schwaderablage hinter dem landwirtschaftlichen Fahrzeuggespann erfolgt. Die Einstellvorrichtung und/oder das Assistenzsystem ist kommunizierend mit der Sensorvorrichtung verbunden, um das Signal der Sensorvorrichtung zu empfangen.

Die Sensorvorrichtung kann zur Detektion von Parametern, insbesondere Parameterdaten, während des Betriebs des landwirtschaftlichen Fahrzeuggespanns auf dem landwirtschaftlichen Feld eingerichtet, insbesondere ausgebildet und/oder programmiert, sein, wobei sich diese Daten auf die Umgebung des landwirtschaftlichen Fahrzeuggespanns, insbesondere auf das landwirtschaftliche Feld, beziehen. Eine solche Sensorvorrichtung kann ein Kamerasystem, eine induktive Sensorvorrichtung, eine kapazitive Sensorvorrichtung und/oder eine Radar basierte Sensorvorrichtung und/oder ein Lidarsystem aufweisen.

Bei einer vorteilhaften Weiterbildung der erfindungsgemäßen Lösung ist vorgesehen, dass das Assistenzsystem dazu vorgesehen und eingerichtet ist, nach vorgegebenen Strategien die Durchführung des Schwadens des abgemähten Futterernteguts zu optimieren, wobei die vorgegebenen Strategien in dem Assistenzsystem hinterlegt sind und/oder an dieses übergeben werden, wobei das Assistenzsystem mittels der vorgegebenen Strategien bezüglich des Energiegehalts, insbesondere des Rohaschegehalts und/oder des Trockenmassegehalts, des abgemähten Futterernteguts optimierte Arbeitsparameter für das landwirtschaftliche Fahrzeuggespann zum Schwaden des abgemähten Futterernteguts während des Futterernteprozesses generiert.

Bei einer vorteilhaften Weiterbildung der erfindungsgemäßen Lösung ist vorgesehen, dass das Assistenzsystem kommunizierend mit der Sensorvorrichtung verbunden ist, um sensorbasierte Daten in Form des Signals der Sensorvorrichtung zu empfangen, wobei das Assistenzsystem kommunizierend mit einem weiteren landwirtschaftlichen Fahrzeuggespann verbunden ist, um weitere sensorbasierte Daten in Form von Futterernteprozessdaten von dem weiteren landwirtschaftlichen Fahrzeuggespan des Futterernteprozesses zu empfangen, wobei das Assistenzsystem dazu vorgesehen und eingerichtet ist, den Traktor und die Schwadvorrichtung in Abhängigkeit des von der Sensorvorrichtung empfangenen Signals und in Abhängigkeit der empfangenen Futterernteprozessdaten, insbesondere automatisch, einzustellen. Diese Futterernteprozessdaten können sensorbasierte Signale und/oder Positionen, insbesondere Positionsdaten, und/oder Eigenschaftsparameter, insbesondere Eigenschaftsparameterdaten und/oder Einstellungsparameterdaten, des weiteren landwirtschaftlichen Fahrzeuggespanns sein. Unter einer kommunizierenden Verbindung kann hier und nachfolgenden zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Ferner können diese miteinander kommunizierend verbundenen Komponenten eine kabelgebundene und/oder drahtlose Datenverbindung ausbilden.

Das landwirtschaftliche Fahrzeuggespann kann eine weitere Sensorvorrichtung aufweisen, die dazu vorgesehen und eingerichtet, Kräfte und/oder Drehmomente zu messen, um die Menge des Erntegutes zu ermitteln. Alternativ oder zusätzlich kann eine weitere Sensorvorrichtung dazu vorgesehen und eingerichtet sein, einen Kontakt mit dem Boden detektieren. Alternativ oder zusätzlich kann eine weitere Sensorvorrichtung als Vibrationssensor ausgebildet sein. Alternativ oder zusätzlich kann eine weitere Sensorvorrichtung, insbesondere auf dem Traktor positioniert, dazu vorgesehen und eingerichtet sein, eine Neigung zu erfassen und somit Bodenwellen, insbesondere zeitlich, vorhersagen. Ferner kann die Schwadvorrichtung eine weitere Sensorvorrichtung aufweisen, die als vor dem Schwadkreisel geführtes Tastrad oder/oder Tastbügel ausgebildet ist, der eine Bodenunebenheit erkennt, sodass eine Optimierung der Rechhöhe der Rechzinken erzielt werden kann. Alternativ oder zusätzlich kann eine weitere Sensorvorrichtung dazu vorgesehen und eingerichtet sein, eine Auslenkung des Rades und/oder des Bügels mit einem Winkelsensor zu erfassen.

Bei einer vorteilhaften Weiterbildung der erfindungsgemäßen Lösung ist vorgesehen, dass das Assistenzsystem dazu vorgesehen und eingerichtet, insbesondere ausgebildet und/oder programmiert, ist, den Traktor und/oder die Schwadvorrichtung in Abhängigkeit von den Futterernteprozessdaten und/oder in Abhängigkeit von mittels einer Positionsbestimmungseinrichtung bestimmten Position des landwirtschaftlichen Fahrzeuggespanns, insbesondere des Traktors und/oder der Schwadvorrichtung, bezüglich des landwirtschaftlichen Feldes einzustellen, wobei die Futterernteprozessdaten sensorbasierten Signalen und/oder Positionen und/oder Eigenschaftsparametern eines landwirtschaftlichen Fahrzeuggespanns zum Mähen des Futterernteguts entsprechen. Das Fahrzeuggespann zum Mähen des Futterernteguts kann einen Traktor und wenigstens eine an diesem Traktor gekoppelte Mähwerkvorrichtung zum Mähen des Futterernteguts, welches auf einem landwirtschaftlichen Feld positioniert ist, aufweisen.

Alternativ oder zusätzlich kann das Assistenzsystem dazu vorgesehen und eingerichtet, insbesondere ausgebildet und/oder programmiert, sein, den Traktor und/oder die Schwadvorrichtung in Abhängigkeit von den Futterernteprozessdaten und/oder in Abhängigkeit von mittels einer Positionsbestimmungseinrichtung bestimmten Position des landwirtschaftlichen Fahrzeuggespanns, insbesondere des Traktors und/oder der Schwadvorrichtung, bezüglich des landwirtschaftlichen Feldes einzustellen, wobei die Futterernteprozessdaten sensorbasierten Signalen und/oder Positionen und/oder Eigenschaftsparametern eines landwirtschaftlichen Fahrzeuggespanns zum Ernten der Schwade des abgehmähten Futterernteguts entsprechen. Das Fahrzeuggespann zum Ernten der Schwade des abgehmähten Futterernteguts kann eine selbstfahrende landwirtschaftliche Arbeitsmaschine, insbesondere ein selbstfahrender Feldhäcksler, sein.

Alternativ oder zusätzlich kann das Assistenzsystem dazu vorgesehen und eingerichtet, insbesondere ausgebildet und/oder programmiert, sein, den Traktor und/oder die Schwadvorrichtung in Abhängigkeit von den Futterernteprozessdaten und/oder in Abhängigkeit von mittels einer Positionsbestimmungseinrichtung bestimmten Position des landwirtschaftlichen Fahrzeuggespanns, insbesondere des Traktors und/oder der Schwadvorrichtung, bezüglich des landwirtschaftlichen Feldes einzustellen, wobei die Futterernteprozessdaten sensorbasierten Signalen und/oder Positionen und/oder Eigenschaftsparametern eines landwirtschaftlichen Fahrzeuggespanns zum Transport des geernteten Futterernteguts entsprechen. Das Fahrzeuggespann zum Transport des geernteten Futterernteguts kann einen Traktor und wenigstens einem an diesem Traktor gekoppelten Anhänger zur Aufnahme des abgehmähten Futterernteguts aufweisen.

Die sensorbasierten Signale des Fahrzeuggespanns zum Mähen des Futterernteguts, des Fahrzeuggespanns zum Ernten der Schwade des abgehmähten Futterernteguts und/oder des Fahrzeuggespanns zum Transport des geernteten Futterernteguts können sich auf Parameter bezüglich des landwirtschaftlichen Feldes beziehen, insbesondere während des Betriebs des landwirtschaftlichen Fahrzeuggespanns auf dem landwirtschaftlichen Feld, beziehen. Die Positionen, insbesondere sensorbasierte Positionen, des Fahrzeuggespanns zum Mähen des Futterernteguts, des Fahrzeuggespanns zum Ernten der Schwade des abgehmähten Futterernteguts und/oder des Fahrzeuggespanns zum Transport des geernteten Futterernteguts können sich auf mittels der Positionsbestimmungseinrichtung ermittelten Positionen des Fahrzeuggespanns während des Betriebs des landwirtschaftlichen Fahrzeuggespanns auf dem landwirtschaftlichen Feld zur Futterernte beziehen. Die Eigenschaftsparameter, insbesondere sensorbasierte Eigenschaftsparameter, des Fahrzeuggespanns zum Mähen des Futterernteguts, des Fahrzeuggespanns zum Ernten der Schwade des abgehmähten Futterernteguts und/oder des Fahrzeuggespanns zum Transport des geernteten Futterernteguts können sich auf Einstellungs- und/oder Regelparameter der Komponenten des Fahrzeuggespanns während des Betriebs des landwirtschaftlichen Fahrzeuggespanns auf dem landwirtschaftlichen Feld zur Futterernte beziehen.

Bei einer vorteilhaften Weiterbildung der erfindungsgemäßen Lösung ist vorgesehen, dass wenigstens eine Sensorvorrichtung dazu vorgesehen und eingerichtet, insbesondere ausgebildet und/oder programmiert, ist, mindestens einen erntegutspezifischen Parameter, insbesondere erntegutspezifische Parameterdaten, bezüglich des abgemähten Futterernteguts zu detektieren und ein Signal, insbesondere Signaldaten, auszugeben, welches den detektierten erntegutspezifischen Parameter darstellt, wobei das Assistenzsystem dazu vorgesehen und eingerichtet, insbesondere ausgebildet und/oder programmiert, ist, den Traktor und/oder die Schwadvorrichtung in Abhängigkeit des von der Sensorvorrichtung empfangenen Signals einzustellen. Hierdurch kann ein optimaler, insbesondere zeitlich optimaler, Futterernteprozess bezüglich des abgemähten Futterernteguts ermöglicht und/oder eine optimale Qualität des abgemähten Futterernteguts, insbesondere ein minimaler Futterernteverlust, sichergestellt werden.

Bei einer vorteilhaften Weiterbildung der erfindungsgemäßen Lösung ist vorgesehen, dass das landwirtschaftliche Fahrzeuggespann, insbesondere die Schwadvorrichtung, eine Sensorvorrichtung aufweist, die dazu vorgesehen und eingerichtet, insbesondere ausgebildet und/oder programmiert, ist, einen erntegutspezifischen Parameter bezüglich mittels der Schwadvorrichtung erzeugten Schwades des abgemähten Futterernteguts zu detektieren. Alternativ oder zusätzlich kann das landwirtschaftliche Fahrzeuggespann, insbesondere der Traktor oder die Schwadvorrichtung, eine Sensorvorrichtung aufweisen, die dazu vorgesehen und eingerichtet, insbesondere ausgebildet und/oder programmiert, ist, mindestens einen Parameter bezüglich des landwirtschaftlichen Feldes, welches bezüglich einer Fahrtrichtung des Fahrzeuggespanns vor dem Traktor und/oder vor der Schwadvorrichtung positioniert ist, und/oder einen erntegutspezifischen Parameter bezüglich des abgemähten Futterernteguts, welches bezüglich einer Fahrtrichtung des Fahrzeuggespanns vor dem Traktor und/oder vor der Schwadvorrichtung positioniert ist, zu detektieren. Alternativ oder zusätzlich kann das landwirtschaftliche Fahrzeuggespann wenigstens eine bezüglich des Traktors und bezüglich der Schwadvorrichtung separat ausgebildete Sensorvorrichtung aufweisen. Diese bezüglich des Traktors und bezüglich der Schwadvorrichtung separat ausgebildete Sensorvorrichtung kann als Satellit und/oder als einer fliegende Drohenvorrichtung und/oder ein Flugzeug ausgebildet sein. Diese separat ausgebildete Sensorvorrichtung kann dazu vorgesehen und ausgebildet sein, die Topologie des landwirtschaftlichen Feldes zu bestimmen. Diese separat ausgebildete Sensorvorrichtung kann dazu vorgesehen und ausgebildet sein, mindestens einen Parameter bezüglich des landwirtschaftlichen Feldes und/oder mindestens einen Parameter bezüglich des abgemähten Futtererntegutes und/oder mindestens einen Parameter bezüglich des Bodens des landwirtschaftlichen Feldes, insbesondere sensorbasiert, zu erfassen. Diese mittels der separat ausgebildete Sensorvorrichtung erfassten Parameter können Höheninformationen bezüglich des landwirtschaftlichen Feldes und/oder bezüglich des abgemähten Futtererntegutes und/oder bezüglich des Bodens des landwirtschaftlichen Feldes sein.

Das landwirtschaftliche Fahrzeuggespann kann entlang einer Fahrtrichtung fahren, wobei eine Querrichtung senkrecht und/oder orthogonal zur Fahrtrichtung ausgerichtet ist. Außerdem kann eine Gravitationsrichtung bzw. Erdanziehungskraftrichtung senkrecht und/oder orthogonal zur Fahrtrichtung ausgerichtet sein. Ferner kann die Querrichtung senkrecht und/oder orthogonal zur Gravitationsrichtung bzw. Erdanziehungskraftrichtung ausgerichtet sein. Eine Höhenrichtung ist senkrecht und/oder orthogonal zur Fahrtrichtung und zur Querrichtung ausgerichtet. Die Höhenrichtung kann parallel zur Gravitationsrichtung bzw. Erdanziehungskraftrichtung ausgerichtet sein.

Bei einer vorteilhaften Weiterbildung der erfindungsgemäßen Lösung ist vorgesehen, dass der erntegutspezifische Parameter eine Dichte des abgemähten Futterernteguts, insbesondere eine Schwaddichte des mittels der Schwadvorrichtung erzeugten Schwades des abgemähten Futterernteguts, spezifiziert.

Alternativ oder zusätzlich kann der erntegutspezifische Parameter eine Höhe des abgemähten Futterernteguts, insbesondere eine Schwadhöhe des mittels der Schwadvorrichtung erzeugten Schwades des abgemähten Futterernteguts, spezifizieren. Die Höhe kann sich auf die Schwadhöhe entlang der Höhenrichtung ausgehend vom nicht abgemähten Teil des Futtererntegutes, welches noch nicht vom landwirtschaftlichen Feld getrennt ist, beziehen.

Alternativ oder zusätzlich kann der erntegutspezifische Parameter eine Breite des abgemähten Futterernteguts, insbesondere eine Schwadbreite des mittels der Schwadvorrichtung erzeugten Schwades des abgemähten Futterernteguts, spezifizieren. Die Breite kann sich auf die Breite des abgemähten Futterernteguts bezüglich der Querrichtung beziehen.

Alternativ oder zusätzlich kann der erntegutspezifische Parameter eine Halmausrichtung des abgemähten Futterernteguts, insbesondere eine Halmausrichtung des mittels der Schwadvorrichtung erzeugten Schwades des abgemähten Futterernteguts, spezifizieren. Die Halmausrichtung kann sich auf die Fahrtrichtung und/oder Querrichtung und/oder Höhenrichtung beziehen.

Bei einer vorteilhaften Weiterbildung der erfindungsgemäßen Lösung ist vorgesehen, dass der erntegutspezifische Parameter sich auf Fremdkörper, insbesondere lebende oder nicht lebende Fremdkörper, im abgemähten Futtererntegut, insbesondere auf einen Fremdkörper im mittels der Schwadvorrichtung erzeugten Schwades des abgemähten Futterernteguts, bezieht. Es kann vorgesehen sein, dass die erkannten Fremdkörper kariert werden und an eine Fremdköperbeseitigungsvorrichtung und/oder die nachfolgende selbstfahrende landwirtschaftliche Arbeitsmaschine zum Ernten der Schwade des abgemähten Futterernteguts übermittelt wird. Hierbei kann die Fremdköperbeseitigungsvorrichtung eine autonom fahrende landwirtschaftliche Arbeitsmaschine sein, die beispielweise den Fremdkörper beseitigt. Außerdem kann die nachfolgende selbstfahrende landwirtschaftliche Arbeitsmaschine zum Ernte der Schwade des abgemähten Futterernteguts dazu vorgesehen und eingerichtet sein, basierend von den kartierten Fremdkörpern ein ausreichendes Anheben des Vorsatzgerätes an dieser kartierten Position derart auszuführen, sodass der Fremdkörper auf dem Feld verbleibt. Mit anderen Worten wird eine negative Kollision mit dem Fremdkörper aktiv vermieden.

Alternativ oder zusätzlich kann der erntegutspezifische Parameter eine Masse und/oder eine Ertragsmenge des abgemähten Futterernteguts, insbesondere eine Masse und/oder eine Ertragsmenge des mittels der Schwadvorrichtung erzeugten Schwades des abgemähten Futterernteguts, spezifizieren. Die Schwadposition und/oder Schwadmasse pro Meter kann kartieren werden, um einer nachfolgenden Erntemaschine ein Lenk und Fahrsignal zu liefern.

Bei einer vorteilhaften Weiterbildung der erfindungsgemäßen Lösung ist vorgesehen, dass die Schwadvorrichtung wenigstens einen um eine Kreiselachse umlaufend angetriebenen und mittels Tast- und Stützräder am Boden des landwirtschaftlichen Feldes abstützbaren Schwadkreisel aufweist, wobei der Schwadkreisel eine Kurvenbahnsteuerung für gesteuerte an Zinkenarmen befestigte Rechzinken aufweist, wobei die Zinkenarme endseitig der Kreiselachse zugewandt mit Steuerhebeln bestückte Laufrollen aufweisen, die mit der Kurvenbahnsteuerung in Eingriff stehen, wobei die Steuerhebel der Zinkenarme in Lagern als Teil eines um die Kreiselachse umlaufend angetriebenen Gehäuses gelagert sind. Die Kurvenbahnsteuerung kann vollständig mit einem Schmieröl ausgefüllt sein.

Bei einer vorteilhaften Weiterbildung der erfindungsgemäßen Lösung ist vorgesehen, dass der Schwadkreisel an einem Maschinengestell mittels einem Auslegerarm um eine Achse von einem Klappgelenk an diesem angelenkt ist, und/oder mittels einem Stellantrieb von einer bodennahen Arbeitsstellung in eine bodenfernere Vorgewendestellung oder Transportstellung und umgekehrt überführbar ist, wobei das Maschinengestell ein Fahrgestell mit wenigstens zwei Stützrädern aufweist.

Bei einer vorteilhaften Weiterbildung der erfindungsgemäßen Lösung ist vorgesehen, dass die Schwadvorrichtung einen Einkreiselschwader mit genau einem Schwadkreisel zur Seitenablage eines aus dem abgemähten Futterernteguts erzeugten Schwades ausbildet.

Bei einer vorteilhaften Weiterbildung der erfindungsgemäßen Lösung ist vorgesehen, dass die Schwadvorrichtung einen Zweikreiselschwader mit genau zwei Schwadkreiseln zur Seitenablage eines aus dem abgemähten Futterernteguts erzeugten Schwades ausbildet.

Bei Schwadern mit Seitenablage wird ein Schwad häufig durch eine Hin-und Rückfahrt gebildet. Dabei kann die Schwadbreite durch eine, insbesondere verstellbare, Arbeitsbreite des Schwaders und den Abstand der Fahrspuren des Traktors und des Schwaders zueinander definiert sein. Somit kann die Schwadform mit einer entsprechenden Route entsprechenden angepasst werden. Zusätzlich kann zur gewünschten Schwadform ist auch das Schwadtuch in der Breite angepasst werden. Mit der Schwadbreite kann zudem auch die Abtrocknung gezielt beeinflusst werden. Ein schmaler Schwad sorgt für geringe Abtrocknung, ein breites Schwad für eine schnelle Abtrocknung. Der Seitenschwader bzw. Merger bietet insbesondere viele einstellbare Freiheitsgrade hinsichtlich der Breite welche auf ein Schwad zusammengelegt wird, um das Schwadgewicht und Abtrocknung zu beeinflussen.

Bei einer vorteilhaften Weiterbildung der erfindungsgemäßen Lösung ist vorgesehen, dass die Schwadvorrichtung einen Zweikreiselschwader mit genau zwei Schwadkreiseln zur Mittenablage eines aus dem abgemähten Futterernteguts erzeugten Schwades zwischen den zwei Schwadkreiseln ausbildet. Die zwei Schwadkreisel können bezüglich der Fahrtrichtung den gleichen Längsabstand zum Traktor aufweisen und bezüglich der Querrichtung voneinander einen Querabstand aufweisen.

Bei einer vorteilhaften Weiterbildung der erfindungsgemäßen Lösung ist vorgesehen, dass die Schwadvorrichtung einen Vierkreiselschwader mit genau vier Schwadkreiseln zur Mittenablage eines aus dem abgemähten Futterernteguts erzeugten Schwades zwischen den vier Schwadkreiseln ausbildet, wobei jeweils zwei der vier Schwadkreisel einen Zweikreiselschwader zur Mittenablage ausbilden. Die zwei Zweikreiselschwader können bezüglich der Fahrtrichtung einen unterschiedlichen Längsabstand zum Traktor aufweisen, wobei die Schwadkreisel des Zweikreiselschwaders, der bezüglich der Fahrtrichtung den kleinsten Längsabstand zum Traktor aufweist, einen größeren Querabstand bezüglich der Querrichtung aufweisen als die Schwadkreisel des anderen Zweikreiselschwaders, der bezüglich der Fahrtrichtung nicht den kleinsten Längsabstand zum Traktor aufweist.

Bei einer vorteilhaften Weiterbildung der erfindungsgemäßen Lösung ist vorgesehen, dass die Schwadvorrichtung einen Sechskreiselschwader mit genau sechs Schwadkreiseln zur Mittenablage eines aus dem abgemähten Futterernteguts erzeugten Schwades zwischen den sechs Schwadkreiseln ausbildet, wobei jeweils zwei der sechs Schwadkreisel einen Zweikreiselschwader zur Mittenablage ausbilden. Die drei Zweikreiselschwader können bezüglich der Fahrtrichtung einen unterschiedlichen Längsabstand zum Traktor aufweisen, wobei die Schwadkreisel des Zweikreiselschwaders, der bezüglich der Fahrtrichtung den kleinsten Längsabstand zum Traktor aufweist, einen größeren Querabstand bezüglich der Querrichtung aufweisen als die Schwadkreisel der anderen Zweikreiselschwader, die bezüglich der Fahrtrichtung nicht den kleinsten Längsabstand zum Traktor aufweisen. Die Schwadkreisel des Zweikreiselschwaders, der bezüglich der Fahrtrichtung den größten Längsabstand zum Traktor aufweist, können einen kleineren Querabstand bezüglich der Querrichtung aufweisen als die Schwadkreisel der anderen Zweikreiselschwader, die bezüglich der Fahrtrichtung nicht den größten Längsabstand zum Traktor aufweisen.

Bei einer vorteilhaften Weiterbildung der erfindungsgemäßen Lösung ist vorgesehen, dass das Assistenzsystem dazu vorgesehen und eingerichtet, insbesondere ausgebildet und/oder programmiert, ist, wenigstens einen Schwadkreisel der Schwadvorrichtung in Abhängigkeit des von der Sensorvorrichtung empfangenen Signals einzustellen.

Bei einer vorteilhaften Weiterbildung der erfindungsgemäßen Lösung ist vorgesehen, dass das Assistenzsystem dazu vorgesehen und eingerichtet, insbesondere ausgebildet und/oder programmiert, ist, wenigstens eine Umlaufgeschwindigkeit und/oder Drehgeschwindigkeit wenigstens eines Schwadkreisels der Schwadvorrichtung um dessen Kreiselachse in Abhängigkeit des von der Sensorvorrichtung empfangenen Signals einzustellen.

Bei einer vorteilhaften Weiterbildung der erfindungsgemäßen Lösung ist vorgesehen, dass das Assistenzsystem dazu vorgesehen und eingerichtet, insbesondere ausgebildet und/oder programmiert, ist, wenigstens eine Ausrichtung der Kreiselachse wenigstens eines Schwadkreisels der Schwadvorrichtung in Abhängigkeit des von der Sensorvorrichtung empfangenen Signals einzustellen. Die Ausrichtung der Kreiselachse kann sich auf eine Winkelausrichtung der Kreiselachse bezüglich der Fahrtrichtung und/oder der Querrichtung und/oder der Höhenrichtung beziehen.

Bei einer vorteilhaften Weiterbildung der erfindungsgemäßen Lösung ist vorgesehen, dass das Assistenzsystem dazu vorgesehen und eingerichtet, insbesondere ausgebildet und/oder programmiert, ist, eine Positionierung wenigstens eines Schwadkreisels der Schwadvorrichtung gegenüber dem Traktor in Abhängigkeit des von der Sensorvorrichtung empfangenen Signals einzustellen.

Bei einer vorteilhaften Weiterbildung der erfindungsgemäßen Lösung ist vorgesehen, dass das Assistenzsystem dazu vorgesehen und eingerichtet, insbesondere ausgebildet und/oder programmiert, ist, eine Beabstandung der Rechzinken wenigstens eines Schwadkreisels der Schwadvorrichtung bezüglich des Bodens des landwirtschaftlichen Feldes in Abhängigkeit des von der Sensorvorrichtung empfangenen Signals einzustellen.

Bei einer vorteilhaften Weiterbildung der erfindungsgemäßen Lösung ist vorgesehen, dass das Assistenzsystem dazu vorgesehen und eingerichtet ist, einen Datenaustausch mittels einer kommunizierenden Verbindungen mit einer außerhalb des landwirtschaftlichen Fahrzeuggespanns positionierten Positionsbestimmungseinrichtung auszuführen, um die Position des landwirtschaftlichen Fahrzeuggespanns, insbesondere des Traktors und/oder der Schwadvorrichtung, bezüglich des landwirtschaftlichen Feldes zu bestimmen.

Alternativ oder zusätzlich kann das Assistenzsystem dazu vorgesehen und eingerichtet sein, die von der Sensorvorrichtung empfangenen Signale an ein weiteres landwirtschaftliches Fahrzeuggespann des Futterernteprozesses zu übermitteln, und/oder die von der Sensorvorrichtung empfangenen Signale mit dem mittels der Positionsbestimmungseinrichtung erfassten Position zu verknüpfen und dies an ein weiteres landwirtschaftliches Fahrzeuggespann des Futterernteprozesses zu übermitteln.

Die Positionsbestimmungseinrichtung kann zur Positionsbestimmung mittels Satellitennavigationssignalen ausgebildet und/oder programmiert sein, wobei wenigstens eine Satellitenvorrichtung zur Positionsbestimmung der einen oder der mehreren landwirtschaftlichen Fahrzeuggespanne bezüglich der landwirtschaftlichen Feldes für die Futterernte verwendet werden kann. Die Satellitenvorrichtung kann GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer stationären Bodenstation eingesetzt wird, um die Position des landwirtschaftlichen Fahrzeuggespanns innerhalb des landwirtschaftlichen Feldes für die Futterernte zu ermitteln. Hierbei kann zusätzlich eine stationäre Bodenstation, insbesondere außerhalb des landwirtschaftlichen Feldes, angeordnet sein.

Bei einer vorteilhaften Weiterbildung der erfindungsgemäßen Lösung ist vorgesehen, dass das Assistenzsystem dazu vorgesehen und eingerichtet ist, den Energiegehalt des abgemähten Futterernteguts zu maximieren, und/oder dass das Assistenzsystem dazu vorgesehen und eingerichtet ist, den Rohaschegehalt des abgemähten Futterernteguts zu minimieren, und/oder dass das Assistenzsystem dazu vorgesehen und eingerichtet ist, einen Trockenmassegehalt des abgemähten Futterernteguts im Bereich bis zu 15% und/oder von 30% bis 45%, insbesondere 30% bis 40%, zu bewirken.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein landwirtschaftliches Fahrzeuggespann zum Schwaden von abgemähten Futtererntegut,
- Fig. 2: eine Seitenansicht eines Schwadkreisels des landwirtschaftlichen Fahrzeuggespanns zum Schwaden von abgemähten Futtererntegut,
- Fig. 3: eine Draufsicht auf einen Schwadkreisel des landwirtschaftlichen Fahrzeuggespanns zum Schwaden von abgemähten Futtererntegut, und
- Fig. 4: mehrere landwirtschaftliche Fahrzeuggespanne auf einem landwirtschaftlichen Feld zur Futterernte mit einem auf elektronischem Datenaustausch basierenden Assistenzsystem zur Optimierung des Futterernteprozesses.

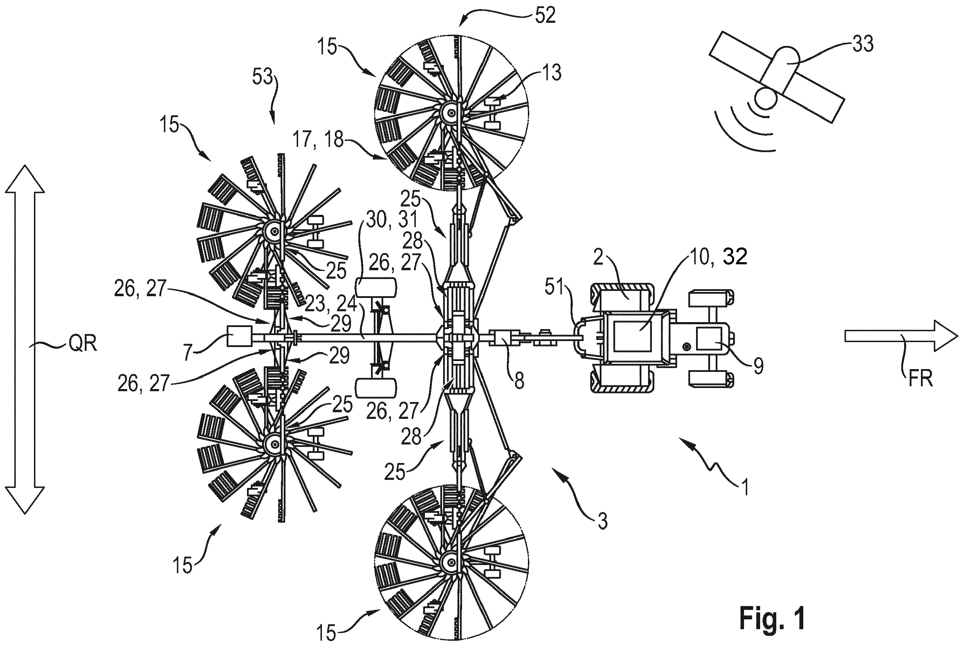

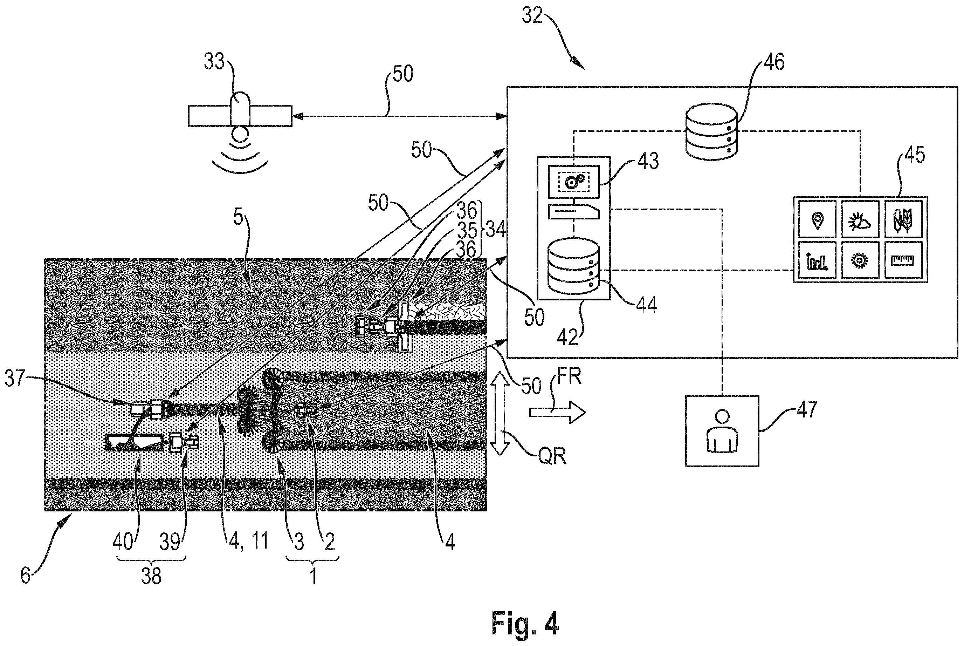

Die Fig. 1 zeigt ein landwirtschaftliches Fahrzeuggespann 1 mit einem Traktor 2 und einer an dem Traktor 2 gekoppelten, insbesondere lösbar gekoppelten, Schwadvorrichtung 3 zum Schwaden von abgemähten Futtererntegut 4, welches auf einem landwirtschaftlichen Feld 6, wie in der Fig. 4 angedeutet, positioniert ist. Dieses landwirtschaftliche Fahrzeuggespann 1, bei dem der Traktor 2 die Schwadvorrichtung 3 zieht, fährt in der Fig. 1 entlang einer Fahrtrichtung FR, wobei eine Querrichtung QR des landwirtschaftliches Fahrzeuggespanns 1 senkrecht und/oder orthogonal zur Fahrtrichtung FR ausgerichtet ist.

Während die Schwadvorrichtung 3 in der Fig. 1 und Fig. 4 jeweils beispielhaft als Vierkreiselschwader mit genau vier Schwadkreiseln 15 zur Mittenablage eines aus dem abgemähten Futterernteguts 4 erzeugten Schwades 11, wie in der Fig. 4 angedeutet, zwischen den vier Schwadkreiseln 15 ausbildet ist, kann die Schwadvorrichtung 3 beispielsweise auch einen Einkreiselschwader mit genau einem Schwadkreisel 15 zur Seitenablage eines aus dem abgemähten Futterernteguts 4 erzeugten Schwades 11 ausbilden, oder einen Zweikreiselschwader mit genau zwei Schwadkreiseln 15 zur Seitenablage eines aus dem abgemähten Futterernteguts 4 erzeugten Schwades 11 ausbilden, oder einen Zweikreiselschwader mit genau zwei Schwadkreiseln 15 zur Mittenablage eines aus dem abgemähten Futterernteguts 4 erzeugten Schwades 11 zwischen den zwei Schwadkreiseln 15 ausbilden, oder einen Sechskreiselschwader mit genau sechs Schwadkreiseln 15 zur Mittenablage eines aus dem abgemähten Futterernteguts 4 erzeugten Schwades 11 zwischen den sechs Schwadkreiseln 15 ausbilden, wobei jeweils zwei der sechs Schwadkreisel 15 einen Zweikreiselschwader zur Mittenablage ausbilden.

In der Fig. 1 und 4 bilden jeweils zwei der vier Schwadkreisel 15 einen Zweikreiselschwader 52 bzw. 53 zur Mittenablage des aus dem abgemähten Futterernteguts 4 erzeugten Schwades 11 aus. Die zwei Zweikreiselschwader 52 und 53 weisen bezüglich der Fahrtrichtung FR einen unterschiedlichen Längsabstand zum Traktor 2 auf, wobei die Schwadkreisel 15 des Zweikreiselschwaders 52, der bezüglich der Fahrtrichtung FR den kleinsten Längsabstand zum Traktor 2 aufweist, einen größeren Querabstand bezüglich der Querrichtung QR aufweisen als die Schwadkreisel 15 des anderen Zweikreiselschwaders 53, der bezüglich der Fahrtrichtung FR nicht den kleinsten Längsabstand zum Traktor 2 aufweist. Mit anderen Worten ausgedrückt, wird der Längsabstand der Zweikreiselschwader 52 und 53 zum Traktor 2 verglichen und dann der Zweikreiselschwader 52 erfasst, der den kleinsten Längsabstand zum Traktor 2 hat.

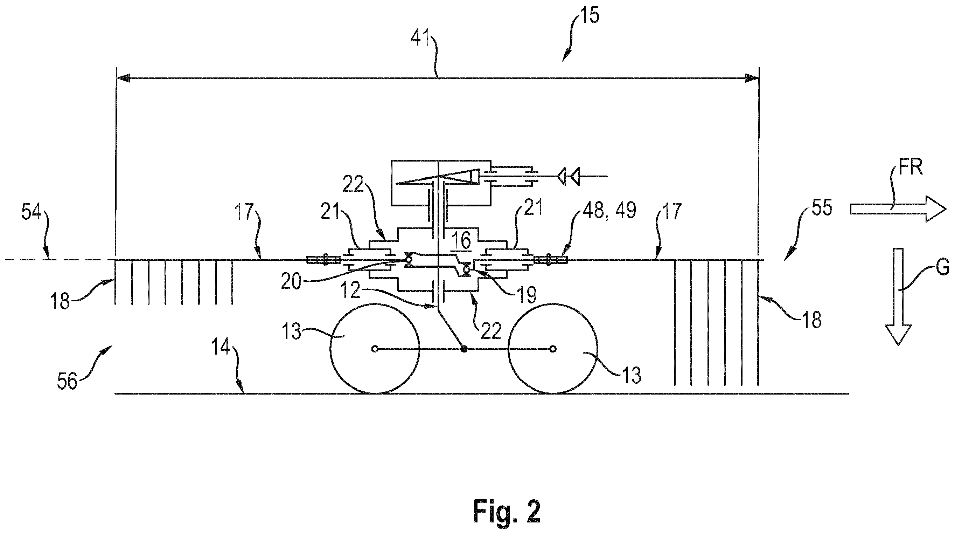

Die Schwadvorrichtung 3 der Fig. 1 besteht im Wesentlichen aus vier Schwadkreiseln 15 mit deren Rechzinken 18 aufnehmenden Zinkenarmen 17, einem Maschinengestell 23, ausgebildet als deichselbildender Längsholm 24 mit einem Fahrgestell 30 und dessen Stützrädern 31. Die um Hochachsen von Kreiselachsen 12 umlaufend angetriebenen Schwadkreisel 15 stützen sich in der Arbeitsstellung mittels Tast- und Stützrädern 13 am Boden 14, wie in der Fig. 2 angedeutet, ab. Am vorderen Ende des Längsholms 24 ist in einem Hochgelenk eine Kupplungseinrichtung 51 an diesem angelenkt. Die Kupplungseinrichtung 51 wiederum wird von den Unterlenkerzapfen eines Heckhubwerks des Traktors 2 aufgenommen. Die Schwadkreisel 15 sind an Auslegerarmen 25 in Klappgelenken 26 um etwa in Fahrtrichtung FR weisende Gelenkachsen 27 an dem Längsholm 24 des Maschinengestells 23 angelenkt. Die Auslegerarme 25, und damit die Schwadkreisel 15, können um die Gelenkachsen 27 von der bodennahen Arbeitsstellung in eine bodenferne Vorgewende- oder Transportstellung mittels, insbesondere hydraulischer, Stellantriebe 28 und 29, insbesondere ausgebildet als Hydraulikzylinder, hochgeklappt werden.

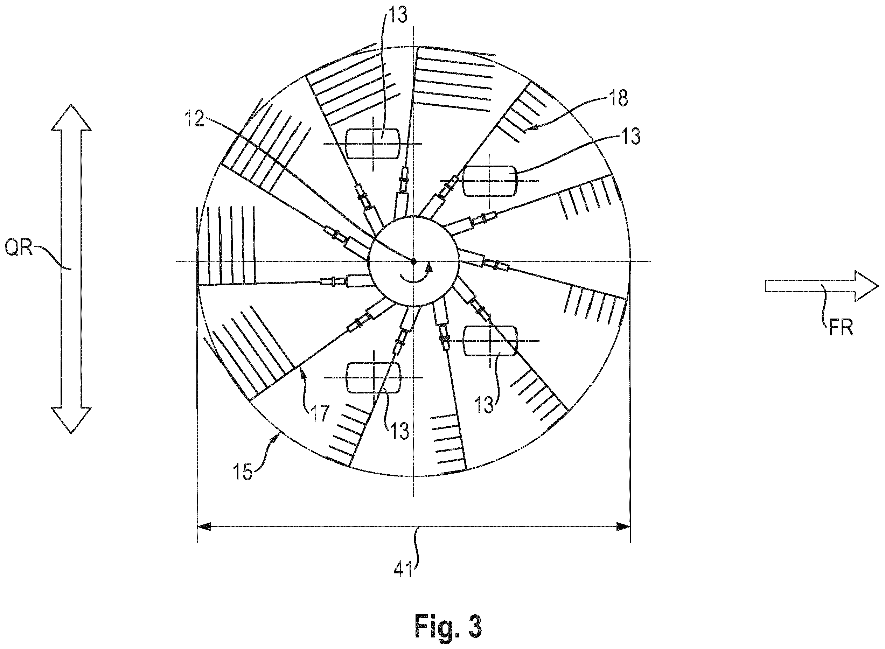

Ein Schwadkreisel 15 der Schwadvorrichtung 3 ist in der Fig. 2 in einer vereinfachten Schnittdarstellung als Drahtmodell und in der Fig. 3 von oben blickend in Blickrichtung, insbesondere entlang der Gravitationsrichtung G, auf den Boden 14 dargestellt.

Der Schwadkreisel 15 mit einem Durchmesser 41, insbesondere einem Kreiseldurchmesser 41, umfasst in bekannter Weise im Wesentlichen aus den Zinkenarmen 17 mit den daran befestigten Rechzinken 18, wobei die Zinkenarme 17 in einem inneren Gehäuse 22 in Lagern 21 schwenkbar gelagert sind. Die Zinkenarme 17 erstrecken sich dabei überwiegend in radialer Richtung lotrecht zur Kreiselachse 12, insbesondere jedoch unter einem tangentialen Anstellwinkel nach außen. Alle Zinkenarmen 17 liegen dabei in derselben Rotationsebene 54. Die Zinkenarme 17 sind in bekannter Weise mittels einer Steckkupplung 48 mit Sicherungsstecken 49 gesichert mit Steuerhebeln 19 einer Kurvenbahnsteuerung 16 verbunden.

Die Rechzinken 18 werden auf ihrer Umlaufbahn um die Kreiselachse 12 mittels Laufrollen 20 besetzten Steuerhebeln 19, die von einer Kurvenbahnsteuerung 16 durch eine Kurvenbahn in ihrer momentanen Ausrichtung, also entweder in ihrer Rechposition 55 oder in ihrer ausgehobenen das Rechgut freigebenden Position 56, gehalten. Daher werden die Rechzinken 18 während ihrer Umlaufbewegung um die Kreiselachse 12 in durch die Stellung der Kurvenbahn vorgegebenen Drehwinkelpositionen periodisch umgesteuert, entweder in die Rechposition 55 oder in die ausgehobene Position 56. In der Rechposition 55 weisen die Rechzinken 18 stets eine Beabstandung zum Boden 14 des landwirtschaftlichen 6 auf. Das innere des Gehäuse 22 des Schwadkreisel 15 kann vollständig mit einem flüssigen Schmiermittel, wie Öl, ausgefüllt sein.

Gemäß der Fig. 1 weist das erfindungsgemäße landwirtschaftliche Fahrzeuggespann 1 wenigstens eine Sensorvorrichtung 7, 8, 9 auf, die dazu vorgesehen und eingerichtet ist, mindestens einen Parameter bezüglich des landwirtschaftlichen Feldes 6 zu detektieren und ein Signal auszugeben, welches den detektierten Parameter darstellt, wobei das landwirtschaftliche Fahrzeuggespann 1 wenigstens eine Einstellvorrichtung 10 aufweist, die kommunizierend mit der Sensorvorrichtung 7, 8, 9 verbunden ist, um das Signal der Sensorvorrichtung 7, 8, 9 zu empfangen. Die Einstellvorrichtung 10 ist als Assistenzsystem 32 eingerichtet, welches die Optimierung des Futterernteprozesses bewirkt. Das Assistenzsystem 32 ist dazu vorgesehen und eingerichtet, den Traktor 2 und/oder die Schwadvorrichtung 3 in Abhängigkeit des von der Sensorvorrichtung 7, 8, 9 empfangenen Signals einzustellen, insbesondere um eine Optimierung des in der Fig. 4 angedeuteten Futterernteprozess des Futtererntegutes 5 auf dem landwirtschaftlichen Feld 6 zu erzielen.

Wenigstens eine Sensorvorrichtung 7, 8, 9 ist dazu vorgesehen und eingerichtet, mindestens einen erntegutspezifischen Parameter bezüglich des abgemähten Futterernteguts 4 zu detektieren und ein Signal auszugeben, welches den detektierten erntegutspezifischen Parameter darstellt, wobei das Assistenzsystem 32 dazu vorgesehen und eingerichtet ist, den Traktor 2 und/oder die Schwadvorrichtung 3 in Abhängigkeit des von der Sensorvorrichtung 7, 8, 9 empfangenen Signals einzustellen.

Das landwirtschaftliche Fahrzeuggespann 1, insbesondere die Schwadvorrichtung 3, weist eine Sensorvorrichtung 7 auf, die dazu vorgesehen und eingerichtet ist, einen erntegutspezifischen Parameter bezüglich mittels der Schwadvorrichtung 3 erzeugten Schwades 11 des abgemähten Futterernteguts 4 zu detektieren. Zusätzlich oder alternativ kann das landwirtschaftliche Fahrzeuggespann 1, insbesondere der Traktor 2 und/oder die Schwadvorrichtung 3, eine Sensorvorrichtung 8 und/oder 9 aufweisen, die dazu vorgesehen und eingerichtet ist, mindestens einen Parameter bezüglich des landwirtschaftlichen Feldes 6, welches bezüglich der Fahrtrichtung FR des Fahrzeuggespanns 1 vor dem Traktor 2 und/oder vor der Schwadvorrichtung 3 positioniert ist, und/oder einen erntegutspezifischen Parameter bezüglich des abgemähten Futterernteguts 4, welches bezüglich der Fahrtrichtung FR des Fahrzeuggespanns 1 vor dem Traktor 2 und/oder vor der Schwadvorrichtung 3 positioniert ist, zu detektieren.

Der erntegutspezifische Parameter kann eine Höhe des abgemähten Futterernteguts 4, insbesondere eine Schwadhöhe des mittels der Schwadvorrichtung 3 erzeugten Schwades 11 des abgemähten Futterernteguts 4, spezifizieren. Die Höhe kann sich auf die Höhenrichtung, insbesondere entgegen der Gravitationsrichtung G, ausgehend vom nicht abgemähten Teil des Futtererntegutes 4, welches noch nicht vom landwirtschaftlichen Feld 6 getrennt ist, beziehen. Alternativ oder zusätzlich kann der erntegutspezifische Parameter eine Breite des abgemähten Futterernteguts 4, insbesondere eine Schwadbreite des mittels der Schwadvorrichtung 3 erzeugten Schwades 11 des abgemähten Futterernteguts 4, spezifizieren. Die Breite kann sich auf die Breite des abgemähten Futterernteguts 4 bezüglich der Querrichtung QR beziehen. Alternativ oder zusätzlich kann der erntegutspezifische Parameter Fremdkörper im abgemähten Futtererntegut 4, insbesondere Fremdkörper im mittels der Schwadvorrichtung 3 erzeugten Schwades 11 des abgemähten Futterernteguts 4, spezifizieren. Alternativ oder zusätzlich kann der erntegutspezifische Parameter eine Masse und/oder eine Ertragsmenge des abgemähten Futterernteguts 4, insbesondere eine Masse und/oder eine Ertragsmenge des mittels der Schwadvorrichtung 3 erzeugten Schwades 11 des abgemähten Futterernteguts 4, spezifizieren. Alternativ oder zusätzlich kann der erntegutspezifische Parameter eine Dichte des abgemähten Futterernteguts 4, insbesondere eine Schwaddichte des mittels der Schwadvorrichtung 3 erzeugten Schwades 11 des abgemähten Futterernteguts 4, spezifizieren. Die Dichte kann sich aus der Breite des abgemähten Futterernteguts 4 und der Höhe des abgemähten Futterernteguts 4 und der Masse und/oder der Ertragsmenge des abgemähten Futterernteguts 4 ergeben. Die Einstellvorrichtung 10 kann dazu vorgesehen und eingerichtet sein, die Dichte basierend auf der sensorerfassen Breite, Höhe, Masse und/oder der Ertragsmenge zu ermitteln. Alternativ oder zusätzlich kann der erntegutspezifische Parameter eine Halmausrichtung des abgemähten Futterernteguts 4, insbesondere eine Halmausrichtung des mittels der Schwadvorrichtung 3 erzeugten Schwades 11 des abgemähten Futterernteguts 4, spezifizieren. Die Halmausrichtung kann sich auf die Fahrtrichtung FR und/oder Querrichtung QR und/oder Höhenrichtung beziehen.

Das Assistenzsystem 32 kann dazu vorgesehen und eingerichtet sein, wenigstens einen Schwadkreisel 15 der Schwadvorrichtung 3 in Abhängigkeit des von der Sensorvorrichtung 7, 8, 9 empfangenen Signals einzustellen. Alternativ oder zusätzlich kann das Assistenzsystem 32 dazu vorgesehen und eingerichtet sein, wenigstens eine Umlaufgeschwindigkeit und/oder Drehgeschwindigkeit wenigstens eines Schwadkreisels 15 der Schwadvorrichtung 3 um dessen Kreiselachse 12 in Abhängigkeit des von der Sensorvorrichtung 7, 8, 9 empfangenen Signals einzustellen. Alternativ oder zusätzlich kann das Assistenzsystem 32 dazu vorgesehen und eingerichtet sein, wenigstens eine Ausrichtung der Kreiselachse 12 wenigstens eines Schwadkreisels 15 der Schwadvorrichtung 3 in Abhängigkeit des von der Sensorvorrichtung 7, 8, 9 empfangenen Signals einzustellen. Alternativ oder zusätzlich kann das Assistenzsystem 32 dazu vorgesehen und eingerichtet sein, eine Positionierung wenigstens eines Schwadkreisels 15 der Schwadvorrichtung 3 gegenüber dem Traktor 2 in Abhängigkeit des von der Sensorvorrichtung 7, 8, 9 empfangenen Signals einzustellen. Alternativ oder zusätzlich kann das Assistenzsystem 32 dazu vorgesehen und eingerichtet sein, eine Beabstandung der Rechzinken 18 wenigstens eines Schwadkreisels 15 der Schwadvorrichtung 3 bezüglich des Bodens 14 des landwirtschaftlichen Feldes 6 in Abhängigkeit des von der Sensorvorrichtung 7, 8, 9 empfangenen Signals einzustellen. Diese Beabstandung der Rechzinken 18 bezüglich des Bodens 14 wird auch Rechhöhe genannt. Das Assistenzsystem 32 ist dazu vorgesehen und eingerichtet, einen drahtlosen, elektronischen Datenaustausch mittels einer kommunizierenden Verbindungen, insbesondere mittels einer drahtlosen Kommunikationsverbindung, mit einer außerhalb des landwirtschaftlichen Fahrzeuggespanns 1 positionierten Positionsbestimmungseinrichtung 33 auszuführen, um die Position des landwirtschaftlichen Fahrzeuggespanns 1, insbesondere des Traktors 2 und/oder der Schwadvorrichtung 3, bezüglich des landwirtschaftlichen Feldes 6 zu bestimmen.

Die Fig. 4 zeigt mehrere landwirtschaftliche Fahrzeuggespanne 1, 34, 37 und 38 auf dem landwirtschaftlichen Feld 6 zur Futterernte und ein auf elektronischem Datenaustausch basierendes Assistenzsystem 32 zur Optimierung des Futterernteprozesses. Die Fahrtrichtung FR und die Querrichtung QR beziehen sich auch in der Fig. 4 auf das landwirtschaftliche Fahrzeuggespann 1, welches zum Schwaden des abgemähten Futterernteguts 4 ausgebildet ist. Das Assistenzsystem 32 kann, insbesondere teilweise, innerhalb des Traktor 2, wie in der Fig. 1 angedeutet und/oder wie in der Fig. 4 angedeutet, insbesondere teilweise, außerhalb des Traktors 2 und außerhalb der Schwadvorrichtung 3 ausgebildet sein. Jedes landwirtschaftliche Fahrzeuggespann 1, 34, 37 und 38 weist jeweils eine Sensorvorrichtung auf, die dazu vorgesehen und eingerichtet ist, mindestens einen Parameter bezüglich des landwirtschaftlichen Feldes 6 zu detektieren und ein Signal auszugeben, welches den detektierten Parameter darstellt. Jedes landwirtschaftliche Fahrzeuggespann 1, 34, 37 und 38 weist wenigstens eine nicht dargestellte Einstellvorrichtung auf, die kommunizierend mit der Sensorvorrichtung verbunden ist, um das Signal der Sensorvorrichtung zu empfangen, wobei die Einstellvorrichtung dazu vorgesehen und eingerichtet ist, das jeweilige landwirtschaftliche Fahrzeuggespann in Abhängigkeit des von der Sensorvorrichtung empfangenen Signals einzustellen.

Jedes landwirtschaftliche Fahrzeuggespann 1, 34, 37 und 38 weist jeweils eine in der Fig. 4 nicht dargestellte Einstellvorrichtung auf, die als Teil des Assistenzsystems 32 dazu eingerichtet ist, einen drahtlosen, elektronischen Datenaustausch mittels einer kommunizierenden Verbindungen, insbesondere mittels einer drahtlosen Kommunikationsverbindung 50, mit dem außerhalb der landwirtschaftlichen Fahrzeuggespanne 1, 34, 37 und 38 positioniertem Teil des Assistenzsystems 32 zur Optimierung eines Futterernteprozesses auszuführen.

Jede Einstellvorrichtung eines jeden landwirtschaftlichen Fahrzeuggespanns 1, 34, 37 und 38 ist jeweils dazu vorgesehen und eingerichtet, einen drahtlosen, elektronischen Datenaustausch mittels einer kommunizierenden Verbindungen mit der außerhalb des landwirtschaftlichen Fahrzeuggespanns 1, 34, 37 und 38 positionierten Positionsbestimmungseinrichtung 33 auszuführen, um die Position des jeweiligen landwirtschaftlichen Fahrzeuggespanns 1, 34, 37 und 38 bezüglich des landwirtschaftlichen Feldes 6 zu bestimmen.

Die Einstellvorrichtung 10 des landwirtschaftlichen Fahrzeuggespanns 1 zum Schwaden des abgemähten Futterernteguts 4 ist dazu vorgesehen und eingerichtet, die von der Sensorvorrichtung 7, 8, 9 empfangenen Signale an das Assistenzsystem 32 zur Optimierung des Futterernteprozesses bezüglich des Futterernteguts 4 des landwirtschaftlichen Feldes 6 zu übermitteln. Alternativ oder zusätzlich ist die Einstellvorrichtung 10 des landwirtschaftlichen Fahrzeuggespanns 1 dazu vorgesehen und eingerichtet, die von der Sensorvorrichtung 7, 8, 9 empfangenen Signale mit dem mittels der Positionsbestimmungseinrichtung 33 erfassen Position zu verknüpfen und dies an das Assistenzsystem 32 zur Optimierung des Futterernteprozesses bezüglich des Futterernteguts 4 des landwirtschaftlichen Feldes 6 zu übermitteln.

Die als Assistenzsystem 32 eingerichtete Einstellvorrichtung 10 des landwirtschaftlichen Fahrzeuggespanns 1 ist dazu vorgesehen und eingerichtet, den Traktor 2 und/oder die Schwadvorrichtung 3 in Abhängigkeit von empfangenen Signalen zur Optimierung des Futterernteprozesses und/oder in Abhängigkeit der mittels der Positionsbestimmungseinrichtung 33 bestimmten Position des landwirtschaftlichen Fahrzeuggespanns 1, insbesondere des Traktors 2 und/oder der Schwadvorrichtung 3, bezüglich des landwirtschaftlichen Feldes 6 einzustellen, wobei die empfangenen Signale sensorbasierten Signalen und/oder Positionen und/oder Eigenschaftsparametern des landwirtschaftlichen Fahrzeuggespanns 34 zum Mähen des Futterernteguts 5 entsprechen. Dieses landwirtschaftliche Fahrzeuggespann 34 zum Mähen des Futterernteguts 5 kann wenigstens einen Traktor 35 mit wenigstens einer Mähwerkvorrichtung oder mit mehreren Mähwerkvorrichtungen 36 aufweisen. Hier weist das landwirtschaftliche Fahrzeuggespann 34 zum Mähen des Futterernteguts 5 beispielhaft eine Frontmähwerkvorrichtung 36 und zwei Heckmähwerkvorrichtungen 36 auf.

Alternativ oder zusätzlich kann die als Assistenzsystem 32 eingerichtete Einstellvorrichtung 10 dazu vorgesehen und eingerichtet sein, den Traktor 2 und/oder die Schwadvorrichtung 3 in Abhängigkeit von empfangenen Signalen zur Optimierung des Futterernteprozesses und/oder in Abhängigkeit der mittels der Positionsbestimmungseinrichtung 33 bestimmten Position des landwirtschaftlichen Fahrzeuggespanns 1, insbesondere des Traktors 2 und/oder der Schwadvorrichtung 3, bezüglich des landwirtschaftlichen Feldes 6 einzustellen, wobei die empfangenen Signale sensorbasierten Signalen und/oder Positionen und/oder Eigenschaftsparametern eines landwirtschaftlichen Fahrzeuggespanns 37 zum Ernten der Schwade 11 des abgehmähten Futterernteguts 5 entsprechen. Hierbei kann es vorgesehen sein, dass die Einstellvorrichtung 10 den Traktor 2 und/oder die Schwadvorrichtung 3 in Abhängigkeit von empfangenen Signalen derart einstellt, dass für das landwirtschaftliche Fahrzeuggespanns 37 eine Schade 11 für eine optimale Ernte erzeugt wird. Das landwirtschaftliche Fahrzeuggespanns 37 zum Ernten der Schwade 11 kann eine selbstfahrende landwirtschaftliche Arbeitsmaschine zum Ernten der Schwade 11, insbesondere ein selbstfahrender Feldhäcksler, sein.

Alternativ oder zusätzlich kann die als Assistenzsystem 32 eingerichtete Einstellvorrichtung 10 dazu vorgesehen und eingerichtet sein, den Traktor 2 und/oder die Schwadvorrichtung 3 in Abhängigkeit von empfangenen Signalen zur Optimierung des Futterernteprozesses und/oder in Abhängigkeit der mittels der Positionsbestimmungseinrichtung 33 bestimmten Position des landwirtschaftlichen Fahrzeuggespanns 1, insbesondere des Traktors 2 und/oder der Schwadvorrichtung 3, bezüglich des landwirtschaftlichen Feldes 6 einzustellen, wobei die empfangenen Signale sensorbasierten Signalen und/oder Positionen und/oder Eigenschaftsparametern eines landwirtschaftlichen Fahrzeuggespanns 38 zum Transport des geernteten Futterernteguts 5 entsprechen. Das landwirtschaftliche Fahrzeuggespanns 38 zum Transport des geernteten Futterernteguts 5 kann einen Traktor 39 mit wenigstens einem Anhänger 40 zur Aufnahme des Futterernteguts 5 aufweisen.

Die Fig. 4 zeigt das Assistenzsystem 32 mit einem datenbankbasierten Verwaltungssystem 42, das eine Verarbeitungseinrichtung 43 und eine mit dieser zur Übertragung von Daten verbundene Datenbank 44 umfasst. Die Datenbank 44 kann als zentrale Datenbank 44 oder aber als dezentrale, also verteilte, Datenbank 44 ausgebildet sein. Auch ist es möglich, dass die Datenbank 44 als cloudbasierte Datenbank 44 implementiert ist. Mit der Verarbeitungseinrichtung 43 kann zudem eine nicht dargestellte Anzeigeeinrichtung verbunden sein, die entweder Teil des Verwaltungssystems 42 oder unabhängig von dem Verwaltungssystem 42 ist. Die nicht dargestellte Anzeigeeinrichtung kann dazu eingerichtet sein, verschiedene von der Verarbeitungseinrichtung 43 erzeugte oder übermittelte grafische Darstellungen dem Nutzer 47 des Verwaltungssystems 42, beispielsweise einem Landwirt oder einem Fahrer, anzuzeigen. Die Verarbeitungseinrichtung 42 kann weiterhin mit einer sogenannten Referenzdatenbank 46 zur Übertragung von Daten verbunden sein, in der sogenannte Referenzdaten 45 hinterlegt sein können, auf die die Verarbeitungseinrichtung 42 zugreifen kann. Die Referenzdatenbank 46 kann beispielsweise historische Qualitätskriterien, insbesondere einer bereits geernteten Futterernte des landwirtschaftlichen Feldes, als Referenzdaten 45 umfassen.

### Bezugszeichenliste

- 1: Landwirtschaftliches Fahrzeuggespann
- 2: Traktor
- 3: Schwadvorrichtung
- 4: abgemähtes Futtererntegut
- 5: Futtererntegut
- 6: landwirtschaftlichen Feld
- 7: Sensorvorrichtung
- 8: Sensorvorrichtung
- 9: Sensorvorrichtung
- 10: Einstellvorrichtung
- 11: Schwad
- 12: Kreiselachse
- 13: Tast- und Stützräder
- 14: Boden
- 15: Schwadkreisel
- 16: Kurvenbahnsteuerung
- 17: Zinkenarme
- 18: Rechzinken
- 19: Steuerhebel
- 20: Laufrolle
- 21: Lager
- 22: Gehäuse
- 23: Maschinengestell
- 24: Längsholm
- 25: Auslegerarm
- 26: Klappgelenk
- 27: Gelenkachse
- 28: Stellantrieb
- 29: Stellantrieb
- 30: Fahrgestell
- 31: Stützrad
- 32: Assistenzsystems
- 33: Positionsbestimmungseinrichtung
- 34: Landwirtschaftliches Fahrzeuggespann zum Mähen des Futterernteguts
- 35: Traktor
- 36: Mähwerkvorrichtung
- 37: Selbstfahrende landwirtschaftliche Arbeitsmaschine zum Ernten der Schwade des abgemähten Futterernteguts
- 38: Landwirtschaftliches Fahrzeuggespann zum Transport des geernteten Futterernteguts
- 39: Traktor
- 40: Anhänger
- 41: Durchmesser
- 42: Verwaltungssystem
- 43: Verarbeitungseinrichtung
- 44: Datenbank
- 45: Referenzdaten
- 46: Referenzdatenbank
- 47: Nutzer
- 48: Steckkupplung
- 49: Sicherungsstecken
- 50: Drahtlose Kommunikationsverbindung
- 51: Kupplungseinrichtung
- 52: Zweikreiselschwader
- 53: Zweikreiselschwader
- 54: Rotationsebene
- 55: Rechposition
- 56: ausgehobene Position

- FR: Fahrtrichtung
- QR: Querrichtung
- G: Gravitationsrichtung

## Patentansprüche

1. Landwirtschaftliches Fahrzeuggespann (1) zum Schwaden von abgemähten Futtererntegut (4) während eines Futterernteprozesses,
- mit einem Traktor (2), und
- mit einer an dem Traktor (2) gekoppelten Schwadvorrichtung (3) zum Schwaden des abgemähten Futterernteguts (4),
**dadurch gekennzeichnet,**
- **dass** das landwirtschaftliche Fahrzeuggespann (1) wenigstens eine Einstellvorrichtung (10) aufweist, die dazu vorgesehen und eingerichtet ist, den Traktor (2) und die Schwadvorrichtung (3) in Abhängigkeit sensorbasierter Daten einzustellen, um einen Energiegehalt, insbesondere einen Rohaschegehalt und/oder einen Trockenmassegehalt, des abgemähten Futterernteguts (4) für den Futterernteprozess zu optimieren.

2. Landwirtschaftliches Fahrzeuggespann (1) nach Anspruch 1,
**dadurch gekennzeichnet,**
- **dass** die Einstellvorrichtung (10) als Assistenzsystem (32) eingerichtet ist, welches eine Optimierung des Futterernteprozesses bewirkt,
- wobei das Assistenzsystem (32) dazu vorgesehen und eingerichtet ist, einen Nutzer (47) bei der Optimierung des Schwadens des abgemähten Futterernteguts (4) während des Futterernteprozesses zu unterstützen, wobei diese Optimierung des Futterernteprozesses zumindest die Planung und/oder Durchführung des Schwadens des abgemähten Futterernteguts (4) umfasst.

3. Landwirtschaftliches Fahrzeuggespann (1) nach Anspruch 1 oder 2,
**dadurch gekennzeichnet,**
- **dass** das landwirtschaftliche Fahrzeuggespann (1) wenigstens eine Sensorvorrichtung (7, 8, 9) zur Schwaderkennung aufweist,
- wobei die Einstellung des landwirtschaftlichen Fahrzeuggespanns (1), insbesondere des Traktors (2) und/oder der Schwadvorrichtung (3), auf Basis von Vorfelderkennung und/oder einer Schwaderablage hinter dem landwirtschaftlichen Fahrzeuggespann (1) erfolgt.

4. Landwirtschaftliches Fahrzeuggespann (1) nach Anspruch 2 oder 3,
**dadurch gekennzeichnet,**
- **dass** das Assistenzsystem (32) dazu vorgesehen und eingerichtet ist, nach vorgegebenen Strategien die Durchführung des Schwadens des abgemähten Futterernteguts (4) zu optimieren,
- wobei die vorgegebenen Strategien in dem Assistenzsystem (32) hinterlegt sind und/oder an dieses übergeben werden,
- wobei das Assistenzsystem (32) mittels der vorgegebenen Strategien bezüglich des Energiegehalts, insbesondere des Rohaschegehalts und/oder des Trockenmassegehalts, des abgemähten Futterernteguts (4) optimierte Arbeitsparameter für das landwirtschaftliche Fahrzeuggespann (1) zum Schwaden des abgemähten Futterernteguts (4) während des Futterernteprozesses generiert.

5. Landwirtschaftliches Fahrzeuggespann (1) nach einem der Ansprüche 1 bis 4,
**dadurch gekennzeichnet,**
- **dass** das Assistenzsystem (32) kommunizierend mit einer Sensorvorrichtung (7, 8, 9) des landwirtschaftlichen Fahrzeuggespanns (1) verbunden ist, um sensorbasierte Daten in Form des Signals der Sensorvorrichtung (7, 8, 9) zu empfangen,
- wobei das Assistenzsystem (32) kommunizierend mit einem weiteren landwirtschaftlichen Fahrzeuggespann (34, 37, 38) verbunden ist, um weitere sensorbasierte Daten in Form von Futterernteprozessdaten von dem weiteren landwirtschaftlichen Fahrzeuggespan (34, 37, 38) des Futterernteprozesses zu empfangen,
- wobei das Assistenzsystem (32) dazu vorgesehen und eingerichtet ist, den Traktor (2) und die Schwadvorrichtung (3) in Abhängigkeit des von der Sensorvorrichtung (7, 8, 9) empfangenen Signals und in Abhängigkeit der empfangenen Futterernteprozessdaten einzustellen.

6. Landwirtschaftliches Fahrzeuggespann (1) nach einem der Ansprüche 1 bis 5,
**dadurch gekennzeichnet,**
- **dass** das landwirtschaftliche Fahrzeuggespann (1), insbesondere der Traktor (2) und/oder die Schwadvorrichtung (3), eine Sensorvorrichtung (7) aufweist, die dazu vorgesehen und eingerichtet ist, als sensorbasierte Daten einen erntegutspezifischen Parameter bezüglich mittels der Schwadvorrichtung (3) erzeugten Schwades (11) des abgemähten Futterernteguts (4) zu detektieren, und/oder
- **dass** das landwirtschaftliche Fahrzeuggespann (1), insbesondere der Traktor (2) und/oder die Schwadvorrichtung (3), eine Sensorvorrichtung (8, 9) zur Vorfelderkennung aufweist, die dazu vorgesehen und eingerichtet ist, als sensorbasierte Daten mindestens einen Parameter bezüglich des landwirtschaftlichen Feldes (6) und/oder einen erntegutspezifischen Parameter bezüglich des abgemähten Futterernteguts (4), welches bezüglich einer Fahrtrichtung (FR) des Fahrzeuggespanns (1) vor dem Traktor (2) und/oder vor der Schwadvorrichtung (3) positioniert ist, zu detektieren, und/oder
- **dass** das landwirtschaftliche Fahrzeuggespann (1) wenigstens eine bezüglich des Traktors (2) und bezüglich der Schwadvorrichtung (3) separat ausgebildete Sensorvorrichtung (7, 8, 9) aufweist.

7. Landwirtschaftliches Fahrzeuggespann (1) nach Anspruch 6,
**dadurch gekennzeichnet,**
- **dass** der erntegutspezifische Parameter eine Dichte des abgemähten Futterernteguts (4), insbesondere eine Schwaddichte des mittels der Schwadvorrichtung (3) erzeugten Schwades (11) des abgemähten Futterernteguts (4), spezifiziert, und/oder
- **dass** der erntegutspezifische Parameter eine Höhe des abgemähten Futterernteguts (4), insbesondere eine Schwadhöhe des mittels der Schwadvorrichtung (3) erzeugten Schwades (11) des abgemähten Futterernteguts (4), spezifiziert, und/oder
- **dass** der erntegutspezifische Parameter eine Breite des abgemähten Futterernteguts (4), insbesondere eine Schwadbreite des mittels der Schwadvorrichtung (3) erzeugten Schwades (11) des abgemähten Futterernteguts (4), spezifiziert, und/oder
- **dass** der erntegutspezifische Parameter eine Halmausrichtung des abgemähten Futterernteguts (4), insbesondere eine Halmausrichtung des mittels der Schwadvorrichtung (3) erzeugten Schwades (11) des abgemähten Futterernteguts (4), spezifiziert und/oder
- **dass** der erntegutspezifische Parameter den Energiegehalt, insbesondere einen Rohaschegehalt und/oder einen Trockenmassegehalt, des abgemähten Futterernteguts (4), insbesondere des mittels der Schwadvorrichtung (3) erzeugten Schwades (11) des abgemähten Futterernteguts (4), spezifiziert, und/oder
- **dass** der erntegutspezifische Parameter sich auf Fremdkörper im abgemähten Futtererntegut (4), insbesondere auf einen Fremdkörper im mittels der Schwadvorrichtung (3) erzeugten Schwades (11) des abgemähten Futterernteguts (4), bezieht, und/oder
- **dass** der erntegutspezifische Parameter eine Masse und/oder eine Ertragsmenge des abgemähten Futterernteguts (4), insbesondere eine Masse und/oder eine Ertragsmenge des mittels der Schwadvorrichtung (3) erzeugten Schwades (11) des abgemähten Futterernteguts (4), spezifiziert.

8. Landwirtschaftliches Fahrzeuggespann (1) nach einem der Ansprüche 1 bis 7,
**dadurch gekennzeichnet,**
- **dass** die Schwadvorrichtung (3) wenigstens einen um eine Kreiselachse (12) umlaufend angetriebenen und mittels Tast- und Stützräder (13) am Boden (14) des landwirtschaftlichen Feldes (5) abstützbaren Schwadkreisel (15) aufweist,
- wobei der Schwadkreisel (15) eine Kurvenbahnsteuerung (16) für gesteuerte an Zinkenarmen (17) befestigte Rechzinken (18) aufweist,
- wobei die Zinkenarme (17) endseitig der Kreiselachse (12) zugewandt mit Steuerhebeln (19) bestückte Laufrollen (20) aufweisen, die mit der Kurvenbahnsteuerung (16) in Eingriff stehen,
- wobei die Steuerhebel (19) der Zinkenarme (17) in Lagern (21) als Teil eines um die Kreiselachse (12) umlaufend angetriebenen Gehäuses (22) gelagert sind.

9. Landwirtschaftliches Fahrzeuggespann (1) nach Anspruch 8,
**dadurch gekennzeichnet,**
- **dass** der Schwadkreisel (15) an einem Maschinengestell (23) mittels einem Auslegerarm (25) um eine Achse von einem Klappgelenk (26) an diesem angelenkt ist, und/oder
- **dass** mittels einem Stellantrieb (28, 29) von einer bodennahen Arbeitsstellung in eine bodenfernere Vorgewendestellung oder Transportstellung und umgekehrt überführbar sind, wobei das Maschinengestell (23) ein Fahrgestell (30) mit wenigstens zwei Stützrädern (31) aufweist.

10. Landwirtschaftliches Fahrzeuggespann (1) nach einem der Ansprüche 1 bis 9,
**dadurch gekennzeichnet,**
- **dass** die Schwadvorrichtung (3) einen Einkreiselschwader mit genau einem Schwadkreisel (15) zur Seitenablage eines aus dem abgemähten Futterernteguts (4) erzeugten Schwades (11) ausbildet, oder
- **dass** die Schwadvorrichtung (3) einen Zweikreiselschwader mit genau zwei Schwadkreiseln (15) zur Seitenablage eines aus dem abgemähten Futterernteguts (4) erzeugten Schwades (11) ausbildet, oder
- **dass** die Schwadvorrichtung (3) einen Zweikreiselschwader mit genau zwei Schwadkreiseln (15) zur Mittenablage eines aus dem abgemähten Futterernteguts (4) erzeugten Schwades (11) zwischen den zwei Schwadkreiseln (15) ausbildet, oder
- **dass** die Schwadvorrichtung (3) einen Vierkreiselschwader mit genau vier Schwadkreiseln (15) zur Mittenablage eines aus dem abgemähten Futterernteguts (4) erzeugten Schwades (11) zwischen den vier Schwadkreiseln (15) ausbildet, wobei jeweils zwei der vier Schwadkreisel (15) einen Zweikreiselschwader (52, 53) zur Mittenablage ausbilden, oder
- **dass** die Schwadvorrichtung (3) einen Sechskreiselschwader mit genau sechs Schwadkreiseln (15) zur Mittenablage eines aus dem abgemähten Futterernteguts (4) erzeugten Schwades (11) zwischen den sechs Schwadkreiseln (15) ausbildet, wobei jeweils zwei der sechs Schwadkreisel (15) einen Zweikreiselschwader zur Mittenablage ausbilden.

11. Landwirtschaftliches Fahrzeuggespann (1) nach einem der Ansprüche 8 bis 10,
**dadurch gekennzeichnet,**
- **dass** das Assistenzsystem (32) dazu vorgesehen und eingerichtet ist, wenigstens einen Schwadkreisel (15) der Schwadvorrichtung (3) in Abhängigkeit des von der Sensorvorrichtung (7, 8, 9) empfangenen Signals einzustellen, und/oder
- **dass** das Assistenzsystem (32) dazu vorgesehen und eingerichtet ist, wenigstens eine Umlaufgeschwindigkeit und/oder Drehgeschwindigkeit wenigstens eines Schwadkreisels (15) der Schwadvorrichtung (3) um dessen Kreiselachse (12) in Abhängigkeit des von der Sensorvorrichtung (7, 8, 9) empfangenen Signals einzustellen, und/oder
- **dass** das Assistenzsystem (32) dazu vorgesehen und eingerichtet ist, wenigstens eine Ausrichtung der Kreiselachse (12) wenigstens eines Schwadkreisels (15) der Schwadvorrichtung (3) in Abhängigkeit des von der Sensorvorrichtung (7, 8, 9) empfangenen Signals einzustellen, und/oder
- **dass** das Assistenzsystem (32) dazu vorgesehen und eingerichtet ist, eine Positionierung wenigstens eines Schwadkreisels (15) der Schwadvorrichtung (3) gegenüber dem Traktor (2) in Abhängigkeit des von der Sensorvorrichtung (7, 8, 9) empfangenen Signals einzustellen, und/oder
- **dass** das Assistenzsystem (32) dazu vorgesehen und eingerichtet ist, eine Beabstandung der Rechzinken (18) wenigstens eines Schwadkreisels (15) der Schwadvorrichtung (3) bezüglich des Bodens (14) des landwirtschaftlichen Feldes (6) in Abhängigkeit des von der Sensorvorrichtung (7, 8, 9) empfangenen Signals einzustellen.

12. Landwirtschaftliches Fahrzeuggespann (1) nach einem der Ansprüche 2 bis 11,
**dadurch gekennzeichnet,**
- **dass** das Assistenzsystem (32) dazu vorgesehen und eingerichtet ist, einen Datenaustausch mittels einer kommunizierenden Verbindungen mit einer außerhalb des landwirtschaftlichen Fahrzeuggespanns (1) positionierten Positionsbestimmungseinrichtung (33) auszuführen, um die Position des landwirtschaftlichen Fahrzeuggespanns (1), insbesondere des Traktors (2) und/oder der Schwadvorrichtung (3), bezüglich des landwirtschaftlichen Feldes (6) zu bestimmen, und/oder
- **dass** das Assistenzsystem (32) dazu vorgesehen und eingerichtet ist, die von der Sensorvorrichtung (7, 8, 9) empfangenen Signale an ein weiteres landwirtschaftliches Fahrzeuggespann (34, 37, 38) des Futterernteprozesses zu übermitteln, und/oder
- **dass** das Assistenzsystem (32) dazu vorgesehen und eingerichtet ist, die von der Sensorvorrichtung (7, 8, 9) empfangenen Signale mit dem mittels der Positionsbestimmungseinrichtung (33) erfassten Position zu verknüpfen und dies an ein weiteres landwirtschaftliches Fahrzeuggespann (34, 37, 38) des Futterernteprozesses zu übermitteln.

13. Landwirtschaftliches Fahrzeuggespann (1) nach einem der Ansprüche 2 bis 12,
**dadurch gekennzeichnet,**
- **dass** das Assistenzsystem (32) dazu vorgesehen und eingerichtet ist, den Energiegehalt des abgemähten Futterernteguts (4) zu maximieren, und/oder
- **dass** das Assistenzsystem (32) dazu vorgesehen und eingerichtet ist, den Rohaschegehalt des abgemähten Futterernteguts (4) zu minimieren, und/oder
- **dass** das Assistenzsystem (32) dazu vorgesehen und eingerichtet ist, einen Trockenmassegehalt des abgemähten Futterernteguts (4) im Bereich bis zu 15% und/oder von 30% bis 45%, insbesondere 30% bis 40%, zu bewirken.
